# EUROPEAN PATENT APPLICATION

(11) **EP 3 817 364 A1**
(43) Date of publication of application: **05.05.2021**
(21) Application number: 20160847.8
(22) Date of filing: 04.03.2020
(51) Int. Cl.: H04N 5/272, H04N 5/225

(54) **PHOTOGRAPHING METHOD, PHOTOGRAPHING DEVICE AND STORAGE MEDIUM**

(30) Priority: 30.10.2019 CN 201911046643
(71) Applicant: Beijing Xiaomi Mobile Software Co., Ltd., Beijing 100085 (CN)
(72) Inventor: WANG, Qiang, Beijing, Beijing 100085 (CN); DU, Junzeng, Beijing, Beijing 100085 (CN)
(74) Representative: dompatent von Kreisler Selting Werner - Partnerschaft von Patent- und Rechtsanwälten mbB

(57) **Abstract**

The present disclosure provides a photographing method, a photographing device and a storage medium. The photographing method applied to a terminal including a first camera device and a second camera device includes: controlling the first camera device and the second camera device to photograph simultaneously when a photographing instruction for double exposure is received; acquiring a foreground image for a first target object of objects including the first target object photographed by the first camera device, and marking the first target object in the foreground image to acquire a target object area corresponding to the first target object; acquiring a background image of objects including a second target object photographed by the second camera device; and performing a superposition and integration processing on the foreground image, the background image and the target object area, to acquire a double exposure image.

## Description

### TECHNICAL FIELD

The present disclosure generally relates to the field of electronics technologies, and more specifically, to a photographing method, a photographing device, and a storage medium.

### BACKGROUND

A Double Exposure typically refers to performing a plurality of exposures on a same film.

In the related art, the double exposure is usually two or even more material films superimposed together to realize the purpose of increasing an illusory effect of a picture. Alternatively, the two or even more pictures are overlapped by image processing software to achieve the effect of double exposure.

At present, the technical threshold required to achieve the effect of double exposure is relatively high, and operations are cumbersome, such that it cannot be used widely.

### SUMMARY

The present disclosure provides a photographing method, a photographing device and a storage medium.

According to a first aspect of embodiments of the present disclosure, there is provided a photographing method applied to a terminal including a first camera device and a second camera device, the photographing method includes: controlling the first camera device and the second camera device to photograph simultaneously, when a photographing instruction for double exposure is received; acquiring a foreground image for a first target object of objects including the first target object photographed by the first camera device, and marking the first target object in the foreground image to obtain a target object area corresponding to the first target object; acquiring a background image of objects including a second target object photographed by the second camera device; and performing a superposition and integration processing on the foreground image, the background image and the target object area, to obtain a double exposure image.

In some examples, the first camera device is a front camera device of the terminal, and the second camera device is a rear camera device of the terminal.

In some examples, the acquiring a foreground image for a first target object of objects including the first target object photographed by the first camera device includes: performing a color enhancement processing on the objects including the first target object to obtain the foreground image for the first target object.

In some examples, the color enhancement processing includes: increasing contrast and brightness.

In some examples, after acquiring the target object area corresponding to the first target object, the method further includes: reducing transparency of the target object area.

In some examples, the acquiring a background image of objects including a second target object photographed by the second camera device includes: performing a color filtering processing on the objects including the second target object photographed by the second camera device.

In some examples, the target object area is a face area.

In some examples, the photographing instruction for double exposure includes one of a gesture operation command, a biometric operation command and a key triggering command, or a combination thereof.

According to a second aspect of embodiments of the present disclosure, there is provided a photographing device applied to a terminal including a first camera device and a second camera device, the photographing device includes: a receiving unit configured to receive a photographing instruction for double exposure; a processing unit configured to acquire a foreground image for a first target object of objects including the first target object photographed by the first camera device, and mark the first target object in the foreground image to obtain a target object area corresponding to the first target object; acquire a background image of objects including a second target object photographed by the second camera device; and perform a superposition and integration processing on the foreground image, the background image and the target object area, to obtain a double exposure image.

In some examples, the first camera device is a front camera device of the terminal, and the second camera device is a rear camera device of the terminal.

In some examples, the processing unit is configured to: perform a color enhancement processing on the objects including the first target object to obtain the foreground image for the first target object.

In some examples, the color enhancement processing includes: increasing contrast and brightness.

In some examples, the processing unit is further configured to, after acquiring the target object area corresponding to the first target object, reduce transparency of the target object area.

In some examples, the processing unit acquires the background image by adopting the following mode: performing a color filtering processing on the objects including the second target object photographed by the second camera device.

In some examples, the target object area is a face area.

In some examples, the photographing instruction for double exposure includes one of a gesture operation command, a biometric operation command and a key triggering command, or a combination thereof.

According to a third aspect of embodiments of the present disclosure, there is provided a non-transitory computer readable storage medium having computer executable instructions stored thereon, which perform, as executed by a processor, the photographing method according to the first aspect or any example in the first aspect described above.

According to a fourth aspect of embodiments of the present disclosure, there is provided a device comprising: a memory configured to storing instructions; and a processor configured to invoke the instructions to perform the photographing method according to the first aspect or any example in the first aspect described above.

It should be understood that both the above general description and the following detailed description are exemplary and explanatory only and cannot limit the disclosure.

### BRIEF DESCRIPTION OF THE DRAWINGS

The accompanying drawings, which are incorporated in and constitute a part of this disclosure, illustrate embodiments consistent with the disclosure and, together with the description, serve to explain the principles of the disclosure.
FIG. 1 is a flowchart illustrating a photographing method according to some embodiments.
FIG. 2 is a flowchart illustrating a photographing method according to some embodiments.
FIG. 3 is an exemplary view illustrating a photographing effect of double exposure according to some embodiments.
FIG. 4 is a block diagram illustrating a photographing device according to some embodiments.
FIG. 5 is a block diagram of a device according to some embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

In the related art, on the one hand, a double exposure image may be obtained by synthesizing two or more photographed pictures in a single lens reflex camera through a double exposure function embedded in the single lens reflex camera. In order to obtain the double exposure image through photographing with the single lens reflex camera, two or even more objects must be photographed, and only photographing of pictures rather than videos is supported. On the other hand, it can be implemented by third-party software. The third-party software can synthesize the photographed objects with background objects preset in the software to obtain the double exposure image. Because the comparison style or quantity of the preset background objects is relatively fixed, in the process of photographing the double exposure image, it is easy for the user to get bored and lose interest.

To this end, in order to overcome the problems in the related art that the photographing of the double exposure is relatively cumbersome, and that the technical threshold required for the double exposure is relatively high, the present disclosure provides a photographing method capable of photographing the double exposure image easily and conveniently.

The technical solutions according to the exemplary embodiments of the present disclosure can be applied to an application scenario where a camera device on a terminal is used to photograph. In the exemplary embodiments described below, the terminal is also referred to as an intelligent terminal sometimes, wherein the terminal can be a mobile terminal and may also be referred to as a User Equipment (UE), a Mobile Station (MS), etc. The terminal is a device for providing voice and/or data connection to a user, or is a chip disposed in the device, for example, a hand-held device, a vehicle equipment and the like which has a wireless connection function. For example, examples of the terminal may include mobile phones, tablet PCs, notebook PCs, PDAs, Mobile Internet Devices (MIDs), wearable devices, Virtual Reality (VR) devices, Augmented Reality (AR) devices, wireless terminals in industrial control, wireless terminals in autonomous vehicles, wireless terminals in remote surgery, wireless terminals in smart grid, wireless terminals in transportation security, wireless terminals in smart city, wireless terminals in smart home, and the like.

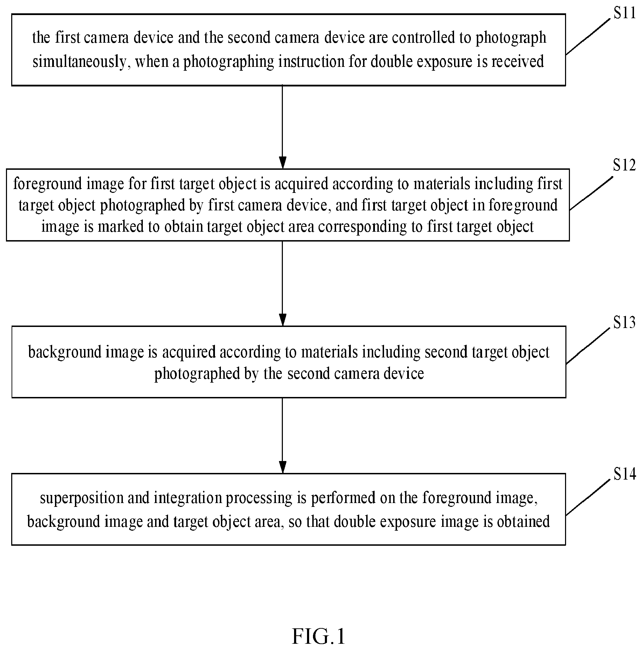

FIG. 1 is a flowchart showing a photographing method according to some embodiments. As shown in FIG. 1, the photographing method is applied in the terminal including a first camera device and a second camera device, and the photographing method includes the following steps.

In step S11, the first camera device and the second camera device are controlled to photograph simultaneously, when a photographing instruction for double exposure is received.

In the exemplary embodiment according to the present disclosure, the photographing instruction for double exposure can be one of a preset gesture operation command, a biometric operation command, or a key triggering command, or a combination thereof. The first camera device and the second camera device can be camera devices located on a same side of the terminal, or may also be camera devices located on an opposite side of the terminal. In other words, the first camera device and the second camera device may both be rear camera devices or front camera devices, and one of the first camera device and the second camera device can be the front camera device, while the other can be the rear camera device.

In various embodiments of the present disclosure, the first camera device and the second camera device can be controlled to start simultaneously to photograph target objects when the photographing instruction for double exposure is received. In the present disclosure, the target objects photographed by the first camera device and the second camera device are different, and for convenience of description, the target object photographed by the first camera device is referred to as a first target object, and the target object photographed by the second camera device is referred to as a second target object. Herein, the first target object is different from the second target object.

In step S12, a foreground image for the first target object is acquired of objects including the first target object photographed by the first camera device, and the first target object in the foreground image is marked to obtain a target object area corresponding to the first target object.

The objects involved in the present disclosure can be objects of pictures, or can also be objects of videos.

In the exemplary embodiments according to the present disclosure, the first camera device and the second camera device photograph simultaneously, and the objects including the first target object are acquired with the first target object photographed by the first camera device.

In one embodiment, the objects including the first target object can be used as a major portion of a synthesized double exposure image. The objects including the first target object can be image objects obtained by photographing a close-up of the target object or prominently photographing the target object. The foreground image for the first target object can be an image obtained by performing a basic adjustment on the objects including the first target object.

Furthermore, in the present disclosure, after the basic adjustment on the objects including the first target object is performed, for example, a color adjustment is performed on the objects including the first target object, and the foreground image for the first target object is acquired, the first target object in the foreground image can be further marked to obtain the target object area corresponding to the first target object.

In the present disclosure, the marking the first target object in the foreground image to obtain the target object area corresponding to the first target object can be automatically recognizing the first target object based on a recognition algorithm of the target object and marking the target object area of the first target object. Herein, the target object can include persons and can further include other animals, plants, etc.. The obtained target object area can be an entire area of the target object, or can also be a local area of the target obj ect.

In step S13, a background image is acquired of objects including a second target object photographed by the second camera device.

In one embodiment, the objects including the second target object can be used as a background portion of the synthesized double exposure image. The objects including the second target object can be image objects obtained by photographing target objects such as natural scenes, etc.. The background image for the second target object can be an image obtained by performing a basic adjustment on the objects including the second target object, such as performing the color adjustment on the objects including the second target object.

In step S14, a superposition and integration processing is performed on the foreground image, the background image and the target object area, so that a double exposure image is obtained.

A basic principle of the double exposure photograph is to superpose and integrate the photographed foreground image with the photographed background image as one image so as to acquire the double exposure image. Therefore, in the present disclosure, the double exposure image is acquired by performing the superposition and integration processing on the foreground image, the background image and the target object area.

In the exemplary embodiments according to the present disclosure, the first camera device and the second camera device are controlled to photograph simultaneously when the photographing instruction for double exposure is received, the foreground objects and the target object area are acquired according to the objects including the first target object photographed by the first camera device, the background objects are acquired according to the objects including the second target object photographed by the second camera device, and then the superposition and integration processing is performed on the foreground image, the background image and the target object area, so that the double exposure image can be taken simply and conveniently.

The photographing method described above would be explained below in connection with practical applications in the embodiments of the present disclosure.

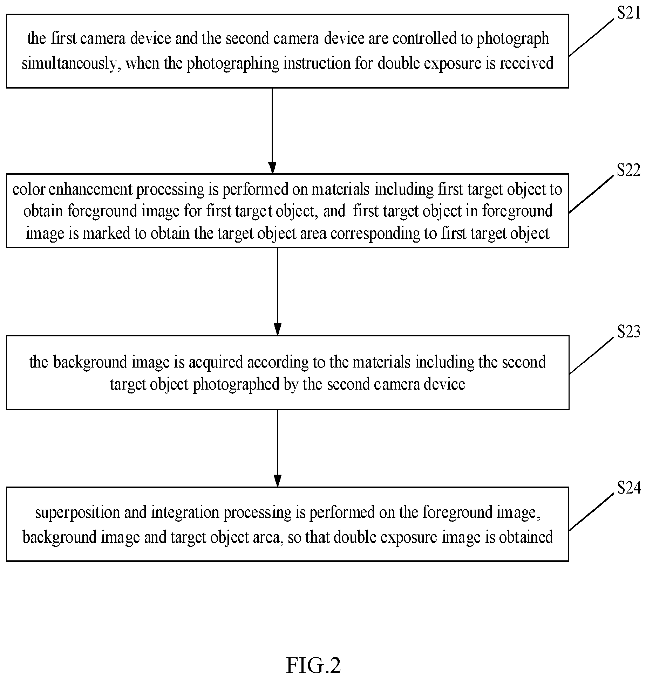

FIG. 2 is a flowchart showing a photographing method, according to some embodiments. As illustrated in FIG.2, the photographing method is applied to the terminal including the first camera device and the second camera device, and includes following steps.

In step S21, the first camera device and the second camera device are controlled to photograph simultaneously, when the photographing instruction for double exposure is received.

In the exemplary embodiments according to the present disclosure, the first camera device and the second camera device can be located at the same side of the terminal, and can also be located at the opposite sides of the terminal.

When the photographing instruction of double exposure is received, on the one hand, the first camera device can be used as a photographing device for the foreground image and the second camera device can be used as a photographing device for the background image automatically, according to a default photographing mode of double exposure. On the other hand, the photographing device can be selected according to a prompting interface instructing the user to select the photographing device for photographing the foreground image and/or the background image, based on the user's practical requirements for photographing, and the photographing device selected for photographing the foreground image is used as a first photographing device, while the photographing device selected for photographing the background image is used as a second photographing device.

In step S22, the color enhancement processing is performed on the objects including the first target object to obtain the foreground image for the first target object, and the first target object in the foreground image is marked to obtain the target object area corresponding to the first target object.

In the exemplary embodiments according to the present disclosure, in order to obtain the image having the double exposure effect, it is required to perform the color enhancement processing on the objects including the first target object to obtain the foreground image for the first target object.

In the exemplary embodiments according to the present disclosure, when the color enhancement processing is performed on the objects including the first target object, the color enhancement processing can be realized in a manner of increasing the contract and brightness of the front objects. By increasing the contract and brightness of the objects including the first target object, the target object area in the objects including the first target object can be made in a bright area, such that darker area(s) of non-target object(s) in the objects including the first target object is dark enough.

In the present disclosure, in order to reduce a layer mixing effect in the target object area after the foreground image, the background image and the target object area are superposed and integrated, it can be realized by reducing the transparency of the target object area.

In step S23, the background image is acquired according to the objects including the second target object photographed by the second camera device.

In the exemplary embodiments according to the present disclosure, in order to acquire the image having the double exposure effect, it is required to perform the color enhancement processing on the objects including the second target object to obtain the background image for the second target object.

In the exemplary embodiments according to the present disclosure, when the color enhancement processing is performed on the objects including the second target object, the color processing can be realized by adopting a mode of performing a color filtering processing on the objects including the second target object, to obtain the background image. By performing the color filtering processing on the objects including the second target object in a color filtering mode, the image obtained by superposing the foreground image and the background image has more realistic effect. In the present disclosure, the color enhancement processing is performed on the objects including the first target object and the objects including the second target object, such that the image obtained by integrating the foreground image and the background image has the effect of double exposure.

In the exemplary embodiments according to the present disclosure, the foreground image is acquired by performing the color enhancement processing on the photographed objects including the first target object, and the background image is acquired by performing the color enhancement processing on the objects including the second target object, so that the image obtained by superposing the foreground image and the background image has the more realistic effect of double exposure, which enhances user's experience.

Herein, when the first camera device and the second camera device locate at the different sides of the terminal in the exemplary embodiments according to the present disclosure, the first camera device is the front camera device of the terminal while the second camera device is a rear camera device of the terminal. And, the first camera device is used as the photographing device for the foreground image and the second camera device is used as the photographing device for the background image, which can be applied to a double exposure scene for face photographing.

In step S24, the superposition and integration processing is performed on the foreground image, the background image and the target object area, so that the double exposure image is obtained.

In the exemplary embodiments according to the present disclosure, when the double exposure image is photographed with the front camera device and the rear camera device, in order to increasing the image illusory effect, the color enhancement processing is performed on the objects including the first target object, for example, the contract and brightness of the front objects are increased, to obtain the foreground image, and then the target object in the foreground image can be further marked and the transparency of the marked target object area can be decreased, so that the illusory effect in the double exposure image can be increased.

The present disclosure would be further explained below by taking a case where the target object photographed by the front camera device is a person and the target object photographed by the rear camera device is a scene as an example.

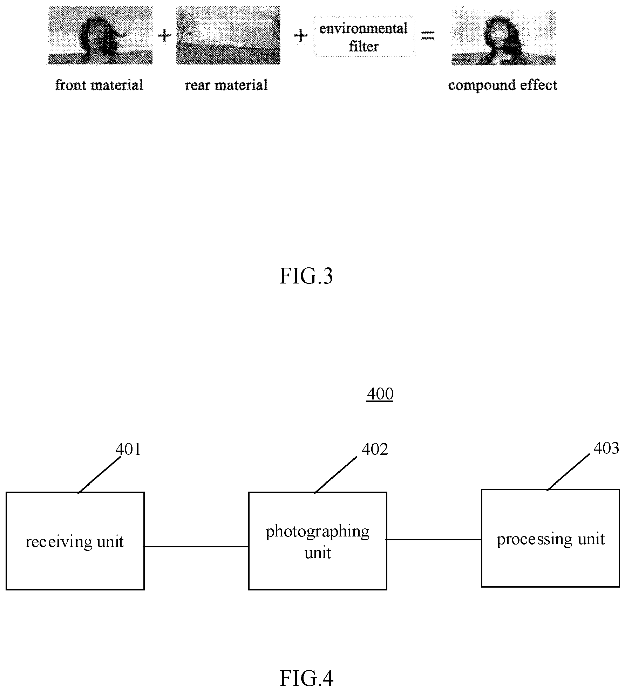

FIG. 3 is an exemplary view illustrating a photographing effect of double exposure, according to some embodiments. In FIG.3, objects including persons are acquired by photographing the persons with the front camera device, and objects including scenes are acquired by photographing the scenes with the rear camera device. The contract and brightness of the objects including the persons are increased, and the objects including the scenes are superposed on the foreground image through the color filtering mode, namely an algorithm of layer mixing mode, in order to reduce the layer mixing effect between the foreground image and the background image. The face area is marked through a face recognition algorithm, and the transparency of the face of the person is decreased, so that the face of the person can be optimized specially, which can ensure that the face would not be affected by the objects in the background, improve the double exposure effect in the image, enhance an interactivity between the terminal and humans and improve the user's experiences.

In the exemplary embodiments according to the present disclosure, the front camera device and the rear camera device are utilized to photograph, the target object in the acquired foreground image is marked and an optimization processing for reducing the transparency thereof is performed, and then the color filtering processing is performed on the background image, such that in the synthesized double exposure image, the target object in the foreground is not affected by the background image, and thus the double exposure effect in the image is enhanced, which increases diversity in photographing of the camera device, enhances an interactivity between the terminal and humans, and increase the user's experiences.

Based on the same invention concept, the present disclosure further provides a photographing device.

FIG. 4 is a block diagram showing a photographing device 400, according to some embodiments. Referring to FIG.4, the photographing device 400 is applied to the terminal including the first camera device and the second camera device, the photographing device includes: a receiving unit 401, a photographing unit 402 and a processing unit 403.

Wherein the receiving unit 401 is configured to receive the photographing instruction for double exposure; the photographing unit 402 is configured to control the first camera device and the second camera device to photograph simultaneously when the photographing instruction is received; the processing unit 403 is configured to acquire the foreground image for the first target object of objects including the first target object photographed by the first camera device, and mark the first target object in the foreground image to obtain the target object area corresponding to the first target object, acquire the background image of objects including the second target object photographed by the second camera device, and perform the superposition and integration processing on the foreground image, the background image and the target object area, to obtain the double exposure image. As such, the double exposure image can be obtained automatically without user intervention.

In some examples, the first camera device is the front camera device of the terminal, and the second camera device is the rear camera device of the terminal.

In some examples, the processing unit 403 is configured to: perform the color enhancement processing on the objects including the first target object, to obtain the foreground image for the first target object.

In some examples, the color enhancement processing includes: increasing the contrast and the brightness.

In some examples, the processing unit 403 is further configured to, after obtaining the target object area corresponding to the first target object, reduce the transparency of the target object area.

In some examples, the processing unit 403 acquires the background image by adopting the following mode: performing the color filtering processing on the objects including the second target object photographed by the second camera device.

In some examples, the target object area is the face area.

In some examples, the photographing instruction for double exposure includes one of a gesture operation command, a biometric operation command and a key triggering command, or a combination thereof.

Regarding the device in the above embodiment, detailed manners for operations of the respective modules have been described in details in the embodiments related to the corresponding methods, therefore the details would not be described herein.

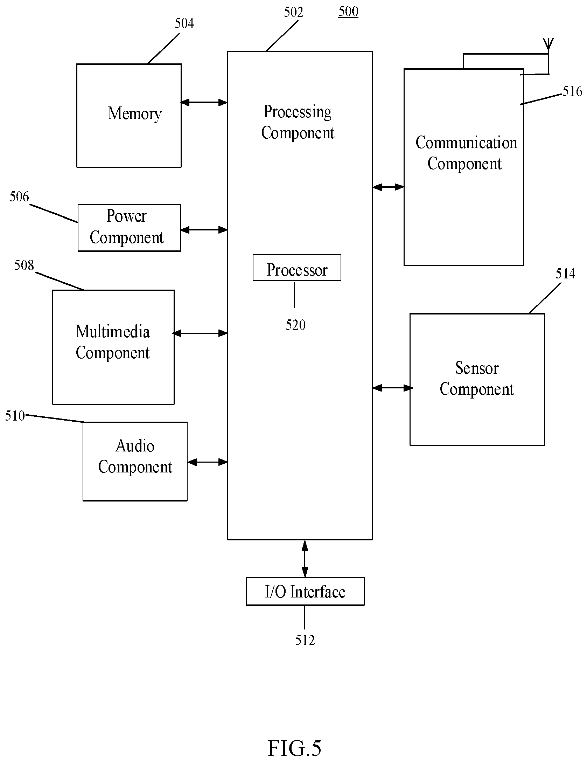

FIG. 5 is a block diagram showing a device 500 for photographing, according to some embodiments. For example, the device 500 can be a mobile phone, a computer, a digital broadcast terminal, a messaging device, a gaming console, a tablet, a medical device, exercise equipment, a personal digital assistant, and the like.

Referring to FIG. 5, the device 500 can include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 can include one or more processors 520 to execute instructions to perform all or part of the steps in the above described methods. Moreover, the processing component 502 can include one or more modules which facilitate the interaction between the processing component 502 and other components. For instance, the processing component 502 can include a multimedia module, to facilitate the interaction between the multimedia component 808 and the processing component 502.

The memory 504 is configured to store various types of data to support the operation of the device 500. Examples of such data include instructions for any applications or methods operated on the device 500, contact data, phonebook data, messages, pictures, video, etc. The memory 504 can be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 can include a power management system, one or more power sources, and any other components associated with the generation, management, and distribution of power for the device 500.

The multimedia component 508 includes a screen providing an output interface between the device 500 and the user. In some embodiments, the screen can include a liquid-crystal display (LCD) and a touch panel (TP). In some embodiments, the screen can be an organic light-emitting diode (OLED) display screen.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and the pressure associated with the touch or swipe action. In some embodiments, the multimedia component 508 includes a front camera and/or a rear camera. The front camera and the rear camera can receive an external multimedia datum while the device 500 is in an operation mode, such as a photographing mode or a video mode. Each of the front camera and the rear camera can be a fixed optical lens system or have focus and optical zoom capability.

The audio component 510 is configured to output and/or input audio signals. For example, the audio component 510 includes a microphone (MIC) configured to receive an external audio signal when the device 500 is in an operation mode, such as a call mode, a recording mode, and a voice recognition mode. The received audio signal can be further stored in the memory 504 or transmitted via the communication component 516. In some embodiments, the audio component 510 further includes a speaker to output audio signals.

The I/O interface 512 provides an interface between the processing component 502 and peripheral interface modules which can be a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 can detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 can include a proximity sensor configured to detect the presence of nearby objects without any physical contact. The sensor component 514 can also include a light sensor, such as a CMOS or CCD image sensor, for use in imaging applications. In some embodiments, the sensor component 514 can also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as Wi-Fi, 2G, 3G, 4G, 5G, and a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 500 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 504 including instructions, executable by the processor 520 in the device 500, for performing the above-described methods. For example, the non-transitory computer-readable storage medium can be a ROM, a RAM, a CD-ROM, a magnetic tape, a floppy disc, an optical data storage device, and the like.

In the embodiments of the present disclosure, the first camera device and the second camera device are controlled to photograph simultaneously when the photographing instruction for double exposure is received, the foreground image is acquired by the photographing of the first camera device together with the target object area in the foreground image. The background image is acquired by the photographing of the second camera device, the superposition and integration processing is performed on the foreground image, the background image and the target object area, and the double exposure image can be captured simply and conveniently.

It may be further understood that "multiple/a plurality of' in the present disclosure refers to two or more, and other quantifiers are similar. "And/or" describes association relationship among associated objects, indicating that there can be three kinds of relationships, for example, A and/or B may indicate that there is A alone, there are A and B at the same time, and there is B alone. A character "/" generally indicates that a relationship between the front and back associated objects is "or". Singular forms "a/an," "said" and "the" are also intended to include plural forms, unless the context clearly indicates otherwise.

It may be further understood that the terms "first," "second" and the like are used to describe various kinds of information, but such information shall not be limited to these terms. These terms are only used to distinguish information of the same type from each other, and do not indicate specific order or importance. In fact, the expressions "first," "second" and the like can be used interchangeably. For example, without departing from the scope of the present disclosure, the first information may also be referred to as the second information, and similarly, the second information may also be referred to as the first information.

Moreover, the terms "first" and "second" are used for descriptive purposes only and are not to be construed as implicitly indicating the number of technical features indicated. Thus, elements referred to as "first" and "second" may include one or more of the features either explicitly or implicitly.

It may be further understood that although the operations are described in a particular order in the drawings in the embodiments of the present disclosure, they should not be understood as requiring the execution of these operations in a particular order or a serial order as shown, or requiring the execution of all the operations as shown to achieve the desired results. Multitasking and parallel processing can be advantageous in a specific environment.

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

The above description includes part of embodiments of the present disclosure, and not limits the present disclosure. Any modifications, equivalent substitutions, improvements, etc., within the spirit and principles of the present disclosure, are included in the scope of protection of the present disclosure.

It is apparent that those of ordinary skill in the art can make various modifications and variations to the embodiments of the disclosure without departing from the spirit and scope of the disclosure. Thus, it is intended that the present disclosure cover the modifications and the modifications.

Various embodiments in this specification have been described in a progressive manner, where descriptions of some embodiments focus on the differences from other embodiments, and same or similar parts among the different embodiments are sometimes described together in only one embodiment.

It should also be noted that in the present disclosure, relational terms such as first and second, etc., are only used to distinguish one entity or operation from another entity or operation, and do not necessarily require or imply these entities having such an order or sequence. It does not necessarily require or imply that any such actual relationship or order exists between these entities or operations.

Moreover, the terms "include," "including," or any other variations thereof are intended to cover a non-exclusive inclusion within a process, method, article, or apparatus that comprises a list of elements including not only those elements but also those that are not explicitly listed, or other elements that are inherent to such processes, methods, goods, or equipment.

In the case of no more limitation, the element defined by the sentence "includes a..." does not exclude the existence of another identical element in the process, the method, or the device including the element.

Specific examples are used herein to describe the principles and implementations of some embodiments. The description is only used to help convey understanding of the possible methods and concepts. Meanwhile, those of ordinary skill in the art can change the specific manners of implementation and application thereof without departing from the spirit of the disclosure. The contents of this specification therefore should not be construed as limiting the disclosure.

For example, in the description of the present disclosure, the terms "some embodiments," or "example," and the like may indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, objects, or characteristics described can be combined in a suitable manner in any one or more embodiments or examples. In addition, various embodiments or examples described in the specification, as well as features of various embodiments or examples, can be combined and reorganized.

In the present disclosure, it is to be understood that the terms "lower," "upper," "center," "longitudinal," "transverse," "length," "width," "thickness," "upper," "lower," "front," "back," "left," "right," "vertical," "horizontal," "top," "bottom," "inside," "outside," "clockwise," "counterclockwise," "axial," "radial," "circumferential," "column," "row," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

In the descriptions, with respect to circuit(s), unit(s), device(s), component(s), etc., in some occurrences singular forms are used, and in some other occurrences plural forms are used in the descriptions of various embodiments. It should be noted; however, the single or plural forms are not limiting but rather are for illustrative purposes. Unless it is expressly stated that a single unit, device, or component etc. is employed, or it is expressly stated that a plurality of units, devices or components, etc. are employed, the circuit(s), unit(s), device(s), component(s), etc. can be singular, or plural.

Based on various embodiments of the present disclosure, the disclosed apparatuses, devices, and methods can be implemented in other manners. For example, the abovementioned devices can employ various methods of use or implementation as disclosed herein.

In the present disclosure, the terms "installed," "connected," "coupled," "fixed" and the like shall be understood broadly, and may be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

Dividing the device into different "regions," "units," "components" or "layers," etc. merely reflect various logical functions according to some embodiments, and actual implementations can have other divisions of "regions," "units," "components" or "layers," etc. realizing similar functions as described above, or without divisions. For example, multiple regions, units, or layers, etc. can be combined or can be integrated into another system. In addition, some features can be omitted, and some steps in the methods can be skipped.

Those of ordinary skill in the art will appreciate that the units, components, regions, or layers, etc. in the devices provided by various embodiments described above can be provided in the one or more devices described above. They can also be located in one or multiple devices that is (are) different from the example embodiments described above or illustrated in the accompanying drawings. For example, the units, regions, or layers, etc. in various embodiments described above can be integrated into one module or divided into several sub-modules.

The various device components, modules, units, blocks, or portions may have modular configurations, or are composed of discrete components, but nonetheless can be referred to as "modules" in general. In other words, the "components," "modules," "blocks," "portions," or "units" referred to herein may or may not be in modular forms.

The order of the various embodiments described above are only for the purpose of illustration, and do not represent preference of embodiments.

Although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to the disclosed aspects of the exemplary embodiments can be made in addition to those described above by a person of ordinary skill in the art having the benefit of the present disclosure without departing from the scope of the disclosure contemplated by this disclosure and as defined in the following claims. As such, the scope of this disclosure is to be accorded the broadest reasonable interpretation so as to encompass such modifications and equivalent structures.

Other embodiments of the disclosure will be apparent to those skilled in the art from consideration of the specification and practice of the invention disclosed here. This application is intended to cover any variations, uses, or adaptations of the disclosure following the general principles thereof and including such departures from the present disclosure as come within known or customary practice in the art. It is intended that the specification and embodiments be considered as exemplary only, with a true scope of the disclosure being indicated by the following claims.

## Claims

1. A photographing method, applied to a terminal including a first camera device and a second camera device, **characterized in that** the method comprises:
controlling (S11) the first camera device and the second camera device to photograph simultaneously, when a photographing instruction for double exposure is received;
acquiring (S12) a foreground image for a first target object of objects including the first target object photographed by the first camera device, and marking the first target object in the foreground image to obtain a target object area corresponding to the first target object;
acquiring (S13) a background image of objects including a second target object photographed by the second camera device; and
performing (S14) a superposition and integration processing on the foreground image, the background image and the target object area, to obtain a double exposure image.

2. The photographing method of claim 1, wherein the first camera device is a front camera device of the terminal, and the second camera device is a rear camera device of the terminal.

3. The photographing method of claim 1 or 2, wherein the acquiring (S12) a foreground image for a first target object of objects including the first target object photographed by the first camera device comprises:
performing a color enhancement processing on the objects including the first target object to obtain the foreground image for the first target object.

4. The photographing method of claim 3, wherein the color enhancement processing comprises:
increasing contrast and brightness.

5. The photographing method of claim 3, wherein after acquiring the target object area corresponding to the first target object, the method further comprises:
reducing transparency of the target object area.

6. The photographing method of claim 1 or 2, wherein the acquiring (S13) a background image of objects including a second target object photographed by the second camera device comprises:
performing a color filtering processing on the objects including the second target object photographed by the second camera device.

7. The photographing method of claim 5, wherein the target object area is a face area.

8. The photographing method of claim 1, wherein the photographing instruction for double exposure comprises one of a gesture operation command, a biometric operation command and a key triggering command, or a combination thereof.

9. A photographing device (400), **characterized in that** it is applied to a terminal including a first camera device and a second camera device, and comprises:
a receiving unit (401) configured to receive a photographing instruction for double exposure;
a photographing unit (402) configured to control the first camera device and the second camera device to photograph simultaneously, when the receiving unit receives the photographing instruction for double exposure;
a processing unit (403) configured to acquire a foreground image for a first target object of objects including the first target object photographed by the first camera device, and mark the first target object in the foreground image to obtain a target object area corresponding to the first target object,
acquire a background image of objects including a second target object photographed by the second camera device, and
perform a superposition and integration processing on the foreground image, the background image and the target object area, to obtain a double exposure image.

10. The photographing device of claim 9, wherein the first camera device is a front camera device of the terminal, and the second camera device is a rear camera device of the terminal.

11. The photographing device of claim 9 or 10, wherein the processing unit (403) is further configured to:
perform a color enhancement processing on the objects including the first target object to obtain the foreground image for the first target object.

12. The photographing device of claim 11, wherein the processing unit (403) is further configured to:
after acquiring the target object area corresponding to the first target object, reduce transparency of the target object area.

13. The photographing device of claim 9 or 10, wherein the processing unit (403) acquires the background image by adopting the following mode:
performing a color filtering processing on the objects including the second target object photographed by the second camera device.

14. A photographing device (500) implementing the photographing method of any one of claims 1-8, comprising:
a processer (520);
a memory (504) for storing instructions executable by the processor (520);
wherein the processor (520) is configured to perform operations of the photographing method.

15. A non-transitory computer-readable storage medium having computer executable instructions stored thereon, which perform, as executed by a processor, the photographing method of any one of claims 1-8.
